Europäisches Patentamt

European Patent Office

Office européen des brevets

(19)

(11) Veröffentlichungsnummer: **0 150 427**
**B1**

(12)

# EUROPÄISCHE PATENTSCHRIFT

(45) Veröffentlichungstag der Patentschrift:
**19.04.89**

(21) Anmeldenummer: **84115664.9**

(22) Anmeldetag: **18.12.84**

(51) Int. Cl.⁴: **C 08 L 71/02,** C 08 G 18/14,
C 08 G 18/65

(54) **Einphasig lagerstabile, salzhaltige Gemische und ihre Verwendung zur Herstellung von Polyurethanen.**

(30) Priorität: **30.12.83 DE 3347574**

(43) Veröffentlichungstag der Anmeldung:
**07.08.85 Patentblatt 85/32**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**EP-A-0 095 635
DE-A-2 261 545
DE-A-2 930 881
US-A-3 298 980
US-A-4 126 741
US-D-3 993 576**

(73) Patentinhaber: **BAYER AG, Konzernverwaltung RP
Patentabteilung, D-5090 Leverkusen 1 Bayerwerk
(DE)**

(72) Erfinder: **Rasshofer, Werner, Dr., Wolfskaul 10,
D-5000 Köln 80 (DE)**
Erfinder: **Paul, Reiner, Dr., Oberhausener- Strasse
155, D-4330 Mülheim/Ruhr (DE)**

**Beschreibung**

Die Erfindung betrifft, homogen lagerstabile, bestimmte organische Polyhydroxylverbindungen und Salze enthaltende Gemische und ihre Verwendung zur Herstellung von Polyurethankunststoffen.

Es ist aus der DE-B-1 770 703 bekannt, zur Herstellung von Polyurethanen Gemische von miteinander unverträglichen Polyolen einzusetzen. Auf diese Weise sind Endprodukte mit verbessertem Eigenschaftsniveau wie beispielsweise guter Wärmebeständigkeit und hoher Schlagzähigkeit zugänglich.

Dieses Prinzip der Polyurethanherstellung unter Verwendung von unverträglichen Polyolgemischen eignet sich gemäß der DE-A-2 309 861 auch zur Herstellung von Schaumstoff-Formkörpern mit kompakter Oberfläche.

Die Verwendung einer Mischung unverträglicher Polyole hat jedoch eine Reihe lager- und verarbeitungstechnischer Nachteile. Bereits eine kurzfristige Lagerhaltung, d. h. einige Stunden bis 3 Tage, derartiger gut durchgemischter Polyolsysteme bedingt die Auftrennung des Gemisches in 2 Phasen, so daß vor jedem Abfüllen die Polyolmischungen wieder sehr intensiv durchmischt werden bzw. ständig gemischt oder im Kreislauf gefahren werden müssen, um zu gewährleisten, daß das Mischungsverhältnis der Komponenten erhalten bleibt.

Es sind verschiedene Wege bekannt geworden, solche Mischungen phasenstabil einzustellen.

Das Absetzen der Phasen kann z. B. gemäß der Lehre der US-PS-3 945 939 durch den Zusatz von kolloidaler Kieselsäure oder eines mit einer Oniumverbindung modifizierten Tons erfolgen. Ähnlich lehrt die DE-A-2 341 294 die Mitverwendung von inerten, oberflächenaktiven Materialien, die eine spez. Oberfläche von 10 - 800 $m^2$/g aufweisen, wie Kieselsäureagglomerat und/oder ein Chrysotil-Asbest und/oder ein in seinem mineralischen Aufbau Chrysotil-Asbest entsprechendes anorganisches Material.

Eine andere Möglichkeit, mehrere miteinander unverträgliche Polyole zu homogenisieren, besteht in der Mitverwendung von flüssigen oder löslichen Lösungsvermittlern. So werden gemäß US-PS-4 141 952 Gemische aus monomeren Polyolen mit einer Molmasse < 500 und Polyetherpolyolen mit einer Molmasse von 1800 - 7000 dadurch vor der Separation bewahrt, daß sogenannte Pfropfpolypropylenetherglykole der Molmasse 1500 - 3500 mitverwendet werden.

Eine stabile Emulsion aus einem hochmolekularen Polyol und Ethylenglykol oder Butandiol-1,4 wird gemäß US-PS-4 273 884 dadurch hergestellt, daß ein Ethylenoxid/Propylenoxid-Copolymer (Molmasse 12000) mitverwendet wird.

In der DE-B-2 759 398 werden Mischungen aus Poly(oxypropylen/oxyethylen)-polyolen (OH-Zahl 20 - 60) mit bestimmten Oxyethylengehalten und Ethylenglykol oder Butandiol beschrieben. Die verwendeten Polyole weisen dabei zwingend einen Oxyethylenendabschluß von 10 bis 30 Gew.-% und einen inneren Oxyethylengehalt von 5 bis 60 Gew.-% auf. Dabei ist es bevorzugt, daß die Polyole möglichst viel Ethylenoxid im Inneren einverleibt enthalten.

In US-B-471 405 werden Gemische aus hochmolekularen Polyoxyalkylenpolyolen, die OH-Äquivalentgewichte von 650 - 3000 aufweisen, und z. B. Ethylenglykol dadurch vor der Entmischung bewahrt, daß lösliche Diolverbindungen wie 1,2-Butylenglykol, Di-(1,2-butylenglykol), Di-(1,2-propylenglykol) und Tri-(1,2-propylenglykol) mitverwendet werden.

Weiterhin ist es dem Fachmann bekannt, daß zweiphasige Gemische aus miteinander unverträglichen Polyolen auch durch Zugabe von Emulgatoren wie z. B. langkettiger Benzolalkylsulfonate etc. einphasig stabilisiert werden können.

Alle diese Lehren gemäß des Standes der Technik können nicht voll befriedigen. So kann die Verwendung von Feststoffen als Emulsionsstabilisatoren die Abrasion von Mischeinrichtungen bewirken, auch läßt die Stabilisierungswirkung im allgemeinen nach einigen Tagen schon stark nach. Außerdem werden gegen asbestöse Materialien physiologische Bedenken ins Feld geführt. Zu berücksichtigen ist bei der Verwendung solcher oberflächenaktiven Substanzen deren katalytische Eigenaktivität, insbesondere bei Beladung mit Onium-Verbindungen.

Die Mitverwendung von sog. "Pfropfpolyolen", wie sie die US-PS-4 141 852 vorschlägt, hat den Nachteil, daß solche "Pfropfpolyole" gegenüber den Polyolen teuer sind und so die Wirtschaftlichkeit des Verfahrens beeinträchtigen.

Die Lehre der US-PS-4 273 884 vermag ebenfalls nicht die Wünsche nach einem einphasig lagerstabilen Polyolgemisch zu befriedigen. Die herstellbaren Emulsionen zeigen nämlich schon, zumindest teilweise, innerhalb der ersten 6 - 8 Wochen eine Separation der Phasen. Die obige Patentschrift beschreibt im übrigen, daß "ziemlich stabile" Emulsionen erhalten werden.

Die Mitverwendung von Di- und Tripropylenglykol vermag zwar, wie in US-B-471 405 gelehrt wird, solche einphasig stabilen Polyolmischungen zu erzeugen, doch ist es jedem Fachmann bekannt, daß die Mitverwendung dieser Verbindungen zu einem scharfen Abfall der mechanischen Werte daraus hergestellter Polyurethankunststoffteile führt, insbesondere leidet die Wärmeformbeständigkeit.

Die Verwendung üblicher Emulgatoren zur Einphaseneinstellung leidet an einer Reihe von Nachteilen: Die Emulgatoren können mit der Zeit aus der Polyolmischung kristallin ausfallen oder sich z. B. an der Oberfläche anreichern, sie können die katalytische Systembalance in unkontrollierbarer Weise verändern, sie können aus dem fertigen Polyurethanformteil ausschwitzen und damit dessen Gebrauchseigenschaften drastisch mindern.

Es besteht also weiterhin ein dringendes technisches Interesse an für einen genügend langen Zeitraum (mindestens ca. 6 Monate) völlig lagerstabilen Polyol- bzw. Polyol-Polyamin-Formulierungen, die optisch klar sind, eine hohe Misch-Hydroxyl-, gegebenenfalls Hydroxyl-/Amin-Zahl haben und einen hohen Anteil an bevorzugt Ethylenglykol und/oder Butandiol-1,4 aufweisen.

Die DE-A-3 219 759 vermittelt die Lehre, die Verträglichkeit von (i) höhermolekularen Polyoxyalkylen-polyolen des OH-Zahlbereichs 20 - 210, die mindestens 5 Gew.-% überwiegend endständiger Oxyethylensegmente aufweisen, mit (ii) Ethylenglykol dadurch herzustellen, daß man das Ethylenglykol mit 0,1 bis 0,5 Mol Propylenoxid pro Mol Ethylenglykol modifiziert.

Die DE-A-3 219 822 (= EP-A-0 095 635) vermittelt die Lehre, daß die verträglichkeitsmachende Wirkung der Propoxylierung des Ethylenglykols (und/oder des ebenfalls als niedermolekulares Diol in Betracht gezogenen 1,4-Butandiols) noch verstärkt werden kann, wenn man den Gemischen bestimmte Ammonium- oder Metallsalze der auch erfindungsgemäß einzusetzenden Art einverleibt.

Es wurde jedoch von den Autoren der beiden letztgenannten Vorveröffentlichungen nicht erkannt, daß auf die Umsetzung der niedermolekularen Polyole mit Alkyloxiranen, insbesondere mit Propylenoxid völlig verzichtet werden kann, falls diese niedermolekularen Polyole in ausgewählten Mengen in Kombination mit den genannten Salzen zur Anwendung gelangen. Erste orientierende Vorversuche führten vielmehr zu dem Trugschluß, daß die genannte Umsetzung der niedermolekularen Polyole mit Alkyloxiranen, insbesondere mit Propylenoxid zwecks Erreichens der gewünschten Verträglichkeit unabdingbar ist. Erst jetzt wurde erkannt, daß dem nicht so ist, sondern daß auch Ethergruppen-freie, niedermolekulare Polyole mit höhermolekularen, Ethylenoxideinheiten aufweisenden Polyetherpolyolen durch den Zusatz der Salze allein zu homogenen Gemischen vereinigt werden können.

Außerdem wurde gefunden, daß auch Polyolamine oder Polyamine, welche sich (formal) durch teilweisen oder vollständigen Ersatz der Hydroxylgruppen der Polyetherpolyole durch primäre und/oder sekundäre Aminogruppen oder durch Gruppen der Formel $-O-(CH_2)_3-NH_2$ ergeben, nach dem erfindungsgemäßen Prinzip mit niedermolekularen, Ethergruppen-freien Polyolen zu homogenen Mischungen vereinigt werden können.

Gegenstand der Erfindung sind somit einphasig lagerstabile, organische Polyhydroxverbindungen und Salze enthaltende emulgatorfreie Gemische aus

A) Polyoxyalkylenpolyolen des Molekulargewichtsbereichs 400 - 12000, die mindestens 5 Gew.-% und weniger als 80 Gew.-% an Oxyethyleneinheiten enthalten, und in denen 0 - 100 % der Hydroxylgruppen durch primäre oder sekundäre Aminogruppen oder durch die $-O-(CH_2)_3-NH_2$-Gruppe ersetzt sind,

B) mindestens zwei Hydroxylgruppen aufweisenden Polyolen des Molekulargewichts 62 bis 399, die mit A) ohne Zusatz von D) nicht lagerstabil homogen mischbar sind,

C) gegebenenfalls aromatischen Diaminen, in einer Menge bis zu 40 Gewichtsteilen, bezogen auf 100 Gewichtsteile der Komponente A)

D) 0,01 - 10 Gewichtsteilen, bezogen auf 100 Gewichtsteile der Komponente A), an Kaliumsalzen, deren Anionen Reste darstellen, wie sie durch Entfernung von mindestens einem Proton aus einer Säure mit einem $K_S$-Wert von mindestens $10^{-7}$ entstehen, und gegebenenfalls

E) weiteren Hilfs- und Zusatzstoffen der Polyurethanherstellung,

dadurch gekennzeichnet, daß die Komponente B) aus Ethergruppen-freien Alkanpolyolen besteht und in einer Menge von 5 - 50 Gewichtsteilen pro 100 Gewichtsteilen der Komponente A) vorliegt.

Gegenstand der Erfindung ist auch die Verwendung dieser Gemische zur Herstellung von Polyurethankunststoffen.

Die erfindungsgemäßen Gemisch enthalten pro 100 Gewichtsteile der Komponente A)

5 - 50, vorzugsweise 10 - 40 Gewichtsteile der Komponente B),

0 - 40, vorzugsweise 0,1 - 20 Gewichtsteile der Komponente C) und

0,01 - 10, vorzugsweise 0,1 - 5 Gewichtsteile der Komponente D).

Im einzelnen ist zur Natur der Komponenten A) bis D) folgendes zu sagen:

## Komponente A

Die als Komponente A) einzusetzenden Polyetherpolyole sind lineare oder verzweigte, di-, tri-, tetra- oder höherfunktionelle Polyoxyalkylenpolyole ("Polyalkylenoxidpolyole"), die ein Molekulargewicht von 400 bis 12000, vorzugsweise 800 bis 10000 und besonders bevorzugt 1000 bis 8000 aufweisen. Diese Polyoxyalkylenpolyole werden durch Addition von Alkyloxiranen wie z. B. Propylenoxid, Epichlorhydrin, 1,2- oder 2,3-Butylenoxid und/oder Styroloxid an zwei- oder mehrwertige Starter wie z. B. Wasser, Di- oder Polyole, Ammoniak, Amine, Di- oder Polyamine, Aminoalkohole, Hydrazin oder ähnliche Verbindungen hergestellt. Es können auch Gemische von Alkyloxiranen, z. B. aus Propylenoxid und Epichlorhydrin, zur Herstellung der Polyoxyalkylenpolyole verwendet werden. Wesentlich ist jedoch, daß die Polyoxyalkylenpolyole mindestens 5 Gew.-% und weniger als 80 Gew.-% an Oxyethyleneinheiten aufweisen.

Bevorzugt sind dabei folgende Polyetherpolyole:

a) Polyoxyalkylenpolyole, die überwiegend (besonders bevorzugt ausschließlich) endständige Oxyethylenblöcke in den genannten Mengen, vorzugsweise von 10 bis 50 Gew.-% und insbesondere von 12,5 bis 27,5 Gew.-%, bezogen auf die Summe aller im Polyoxyalkylenpolyol vorhandenen Oxyalkyleneinheiten, besitzen. Bevorzugt bestehen die restlichen Oxyalkylenreste aus Oxypropylen-resten.

Die Polyoxyalkylenpolyole sind dabei 2- bis 8-funktionell, bevorzugt di-, tri- oder tetrafunktionell, besonders bevorzugt sind die di- bis trifunktionellen Polyoxyalkylenpolyole der genannten Molekulargewichtsbereiche.

3

Die technisch wichtigsten Polyoxyalkylenpolyole sind dabei die Polyoxypropylenglykole mit 5 bis 80 Gew.-%, vorzugsweise mit 10 bis 50 Gew.-%, besonders bevorzugt mit 12,5 bis 27,5 Gew.-% an überwiegend oder, besonders bevorzugt, ausschließlich endständigen Oxyethylenblöcken und einer Funktionalität von 2 bis 3.

b) Polyoxyalkylenpolyetherpolyole, vorzugsweise Di- oder Triole, die überwiegend oder ausschließlich innenständige Oxyethylenblöcke, vorzugsweise 10 - 50, insbesondere 15 - 35 Gew.-%, bei einem gleichzeitigen Gehalt an endständigen Oxyethyleneinheiten von 0 - 15, besonders bevorzugt 0 - 7,5 Gew.-%, aufweisen und bei denen die restlichen Oxyalkylengruppen Oxypropylengruppen sind.

c) Polyoxyalkylenpolyetherpolyole, die Oxyethylenreste in statistischer Verteilung in einer bevorzugten Menge von 30 - 75 Gew.-%, insbesondere 40 - 60 Gew.-% enthalten, wobei die übrigen Oxyalkylenreste vorzugsweise Oxypropylenreste darstellen.

Die Komponente A) kann auch aus beliebigen Gemischen der bevorzugten Polyetherpolyole a) bis c) bestehen.

Bezüglich aller bevorzugten Polyetherpolyole a) bis c) gilt die Einschränkung, daß es sich um bei Raumtemperatur flüssige Polyetherpolyole handeln muß.

Als Komponente A) geeignet sind auch Derivate der genannten Polyetherpolyole, in denen (formal) bis zu 100 %, vorzugsweise 10 bis 50 % der Hydroxylgruppen durch (bevorzugt) primäre und/oder sekundäre Aminogruppen oder durch Gruppierungen der Formel -O-(CH₂)₃-NH₂ ersetzt sind. Die Herstellung von derartigen Verbindungen durch Aminierung von Polyalkylenglykolethern ist beispielsweise in BE-PS-634 741 oder US-PS-3 654 370 beschrieben. Die Einfügung von Gruppierungen der Formel -O-(CH₂)₃-NH₂ erfolgt beispielsweise durch Addition von Acrylnitril an Polyalkylenetherpolyole und nachfolgende Hydrierung der Cyangruppe gemäß DE-PS-1 193 671. Weitere Möglichkeiten der Herstellung von derartigen, erfindungsgemäß als Komponente A) geeigneten Aminopolyethern sind beispielsweise in DE-OS-2 546 536, US-PS-3 865 791, DE-A-1 694 152, (US-3 625 871), US-PS-3 155 728, US-PS-3 236 895, FR-PS-1 551 605, FR-PS-1 466 708, DE-A-2 019 432, DE-A-2 619 840, US-PS-3 808 250, US-PS-3 975 428, US-PS-4 016 143, DE-A-2 748 419, DE-A-3 039 600 oder EP-A-71 834 beschrieben.

Für diese Aminogruppen aufweisenden Polyether gilt bezüglich der Propylenoxid- und Ethylenoxidgehalte und deren endständige oder nicht endständige Verteilung das oben über die Polyole sowie über deren Molekulargewicht Gesagte.

Bevorzugt werden als Komponente A) Gemische eingesetzt, wie sie durch teilweise Aminierung der primären oder sekundären Hydroxylgruppen von Polyetherpolyolen, bevorzugt von oben unter a) - c) aufgeführten Polyetherpolyolen, entstehen.

## Niedermolekulare Polyole B

Als niedermolekulare Polyole B) kommen mindestens zwei Hydroxylgruppen aufweisende Alkanpolyole des Molekulargewichtsbereichs 62 bis 399, vorzugsweise 62 bis 254 in Betracht. Es handelt sich um niedermolekulare Polyole, die ohne die erfindungsgemäße Mitverwendung von Salzen D) mit den Polyethern A) keine oder für praktische Zwecke ungenügende Mischbarkeit zeigen.

Typische Beispiele sind Ethylenglykol, 1,2-Propandiol, 1,3-Propandiol, 1,4-Butandiol, aliphatische Triole wie Glycerin, Trimethylolethan, 1,2,6-Hexantriol, Trimethylolpropan oder Butantriol-1,2,4.

Bevorzugt sind Ethylenglykol und/oder Butaqdiol-1,4, besonders bevorzugt ist Ethylenglykol.

## Komponente C)

Als Komponente C) kommen aromatische Diamine, insbesondere 2,4-/2,6-Diamino-3,5-diethyltoluole in Betracht.

## Komponente D

Die erfindungswesentlichen Kaliumsalze D) weisen als Anionen Reste auf, wie sie durch Entfernung mindestens eines Protons aus einer Säure mit einer Dissoziationskonstanten von mindestens 10⁻⁷ entstehen, wobei die Säure vorzugsweise aus der Reihe der Mono- oder Polycarbonsäuren, der Kohlensäure, der Halogen- oder Pseudohalogenwasserstoffsäuren, der Stickstoff, Phosphor, Arsen oder Antimon als Zentralatom enthaltenden Säuren, sowie der Chalcogensäuren entstammt. Beispiele für solche Säuren sind Mono- oder Polycarbonsäuren mit 1 bis 8 Kohlenstoffatomen wie z. B. aliphatische Mono- bis Tricarbonsäuren, wie Ameisensäure, Essigsäure, Propionsäure, Buttersäure, n-Octansäure, 2-Ethylhexansäure, Glutarsäure, Adipinsäure, Nitrilotriessigsäure, N,N'-Dimethyl-ethylendiamin-diessigsäure oder Halbester oder Halbamide dieser Di- und Tricarbonsäuren; ferner mindestens eine, bevorzugt 1 - 3 Hydroxyl- und/oder Mercapto- und/oder Aminogruppen aufweisende Mono- oder Polycarbonsäuren, Mono- oder Polysulfonsäuren oder anderer Schwefel enthaltender Säuren, Mono- oder Polyphosphorsäuren, oder anderer, Phosphor, Arsen, Antimon etc. enthaltender Mono- oder Polysäuren wie z. B. Glycin, Methylglycin, Alanin, Thioglykolsäure, Hydroxyessigsäure, Milchsäure, Äpfelsäure, Weinsäure, Mandelsäure, Dimethylolpropionsäure, Ascorbinsäure, die durch Addition von Bisulfiten an z. B. Butendiol-1,4 und Neutralisierung entstehenden Säuren (DE-A-246 440), Hydroxymethansulfon- und -Sulfinsäure, Zitronensäure, 2-Hydroxyethansulfonsäure, Nitrilotriessigsäure, Ethylendiamin-N,N,N',N'-tetraessigsäure, Lysin, Asparaginsäure, 2-Aminoethansulfonsäure, Diaminoethanschwefelsäure, 2-Methylaminoethansulfonsäure, 2-Butylaminoethansulfonsäure, 2-Phosphonobutan-1,2,4-tricarbonsäure, Salicylsäure, Vanillinsäure, α- und β-Resorcylsäure, Gallussäure, Phenol-2-sulfonsäure, 2-Hydroxy-5-(2-nitro-4-sulfophenylsulfonyl)-benzoesäure, 1-Naphthol-4,8-disulfonsäure, Sulfosalicylsäure, Anilinessigsäure, Anthranilsäure, Aminozimtsäure, Metanilsäure, Sulfanilsäure, p-Phenylendiamin-2-sulfonsäure, ferner Phenole wie Phenol, Nitrophenol, oder Bisphenol A.

Weitere Beispiele sind die Salze der Chlor-, Brom- und Jodwasserstoffsäure, der Rhodanwasserstoffsäure, der Cyan- oder Isocyanwasserstoffsäure, Schwefelsäure oder anderer Säuren des Schwefels, z. B. der Thioschwefelsäure; Salpetersäure oder Phosphorsäure.

Bevorzugt als Anionen sind die Anionen von aliphatischen $C_1$-$C_4$-Monocarbonsäuren oder diejenigen der Halogen- oder Pseudohalogenwasserstoffsäuren, Thioschwefelsäure, Salpetersäure, Phosphorsäure, Dimethylolpropionsäure und gegebenenfalls Mono- bis Tetra-oxalkylierungsprodukte der neutralisierten Addukte des 1,4-Butendiols an Kaliumbisulfit, wobei die Anionen durch die Isocyanate in die Polyurethanmatrix eingebaut werden; bevorzugt unter den Anionen sind solche Reste, die keine weiteren, abspaltbaren sauren Protonen mehr enthalten. Besonders bevorzugte Salze sind Kaliumacetat und insbesondere das hinsichtlich der NCO-Reaktionen inerte Kaliumchlorid, welches eine überraschend hohe Wirksamkeit als Lösungsvermittler aufweist.

Die notwendige Menge an Zusätzen D) hängt u. a. sowohl von der Menge an Oxyethylengruppen im Polyether wie auch von der Art und Menge der zugesetzten Diole ab - im allgemeinen wird die notwendige Zusatzmenge an D) umso größer, je geringer der Oxyethylengehalt und je höher der Gehalt an zugesetzten Diolen B) ist.

Im allgemeinen wird so vorgegangen, daß Komponente D) in Komponente B), gegebenenfalls unter Erwärmen, gelöst und dann diese mit Komponente A) und gegebenenfalls mit Komponente C) vereinigt wird, wobei ein optisch klares Gemisch entsteht.

Es ist jedoch auch möglich, einer 2-phasigen Mischung aus A) und B) festes D), gegebenenfalls unter Rühren, zuzugeben, oder zu einer 2-phasigen Mischung aus A) und B) eine konzentrierte Lösung von D) in B) zu geben. Der Ausdruck "optisch klar" bezieht sich auf die Mischung aus A), B) und D), sofern die Ausgangsverbindungen optisch klar sind. Natürlich können durch un- oder schwerlösliche Komponenten C) oder E) Trübungen etc. hervorgerufen werden. Die Einphasigkeit der Mischung aus A) und B) darf davon nicht betroffen sein.

## Zusatzmittel E)

Als übliche Hilfs- und Zusatzmittel E) kommen Katalysatoren der bekannten Art, z. B. tertiäre Amine wie Dimethylbenzylamin, 1,4-Diaza-bicyclo-(2,2,2)-octan oder Triethanolamin, monocyclische oder bicyclische Amidine, Bis-dialkylaminoalkyl-ether oder Amidgruppen aufweisende tertiäre Amine in Frage.

Auch basische Katalysatoren wie Alkalihydroxide, Alkaliphenolate oder Alkalialkoholate, ferner organische Metallverbindungen, insbesondere organische Blei- und Zinnverbindungen, können eingesetzt werden, z. B. Zinn-(II)-octoat, Zinn-(II)-laurat, Dibutylzinndilaurat oder deren Gemische.

Es können jedoch auch Reaktionsverzögerer für die Isocyanatreaktion, z. B. sauer reagierende Stoffe, wie Salzsäure oder organische Säurehalogenide, Borsäure oder Schwefeldioxid, ferner Zellregler für Schaumstoffe der an sich bekannten Art, wie Paraffine oder Fettalkohole, oder auch Dimethylpolysiloxane, sowie Pigmente und/oder Farbstoffe sowie Flammschutzmittel der an sich bekannten Art, ferner Stabilisatoren gegen Licht-, Alterungs- und Witterungseinflüsse, Weichmacher und fungistatisch und bakteriostatisch wirkende Substanzen zugegeben werden. Weitere Beispiele dieser Zusatzmittel sind im Kunststoff-Handbuch, Band 7, herausgegeben von Vieweg und Höchtlen, Carl Hanser Verlag, München 1966, auf den Seiten 96 bis 113, Treibmittel zur Herstellung von Polyurethanschaumstoffen auf den Seiten 453 bis 455 und 507 bis 510, sowie in der 2. Auflage dieses Handbuchs, Band 7 (1983) auf den Seiten 92 bis 112 beschrieben.

Grundsätzlich können alle Trennmittel des Standes der Technik bei der Herstellung von Polyurethanen, insbesondere Integralschaumstoffen, unter Verwendung der erfindungsgemäßen Polyolgemische mitverwendet werden. Bevorzugt sind innere Formtrennmittel, wie sie beispielsweise in DE-A-1 953 637 (= US-PS-3 726 952), DE-A-2 121 670 (= GB-PS-1 365 215), DE-A-2 431 968 (=US-PS-4 098 731) bzw. in DE-A-2 404 310 (= US-PS-4 058 492) beschrieben sind. Zu den bevorzugten Trennmitteln gehören somit die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen; gesättigte und/oder ungesättigte, COOH- und/oder OH-Gruppen aufweisende Ester von mono- und/oder polyfunktionellen Carbonsäuren und polyfunktionellen Alkoholen mit Hydroxyl- oder Säurezahlen von mindestens 5; esterartige Umsetzungsprodukte aus Ricinolsäure und langkettigen Fettsäuren; Salze aus Carbonsäuren und tertiären Aminen sowie natürliche und/oder synthetische Öle, Fette oder Wachse.

Besonders bevorzugt ist das Ölsäure- oder Tallölfettsäuresalz des amidgruppenhaltigen Amins, das durch Umsetzung von N-Dimethylaminopropylamin mit Ölsäure oder Tallölfettsäure erhalten worden ist.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäß DE-A-2 319 648, die Umsetzungsprodukte aus reaktionsfähige Wasserstoffatome aufweisenden Polysiloxanen mit Mono- und/oder Polyisocyanaten gemäß DE-A-2 356 692 (= US-PS-4 033 912), Ester von Hydroxymethylgruppen aufweisenden Polysiloxanen mit Mono- und/oder Polycarbonsäuren gemäß DE-A-2 363 452 (= US-PS-4 024 090), Salze aus Aminogruppen enthaltenden Polysiloxanen und Fettsäuren gemäß DE-A-2 427 273 oder DE-A-2 431 968 (US-PS-4 098 731), hydroxylsubstituierte Fettsäureamide gemäß US-4 374 222 oder Trennmittel gemäß US-PS-4 111 861, z. B. Gemische aus aromatischen oder aliphatischen Carbonsäuren mit einer polaren Metallverbindung.

Die genannten inneren Formtrennmittel werden, falls überhaupt, in einer Menge von insgesamt 0,1 bis 25 Gew.-%, vorzugsweise 1 bis 10 Gew.-%, bezogen auf das gesamte Reaktionsgemisch, eingesetzt.

Als oberflächenverbessernde Zusatzmittel können ferner mit dem Reaktionsgemisch verträgliche, gegenüber Isocyanatgruppen inerte Polymerisate oder Copolymerisate von olefinisch ungesättigten Monomeren des dampfdruckosmometrisch bestimmbaren Molekulargewichts 200 bis 50 000, vorzugsweise 200 bis 30 000 und besonders bevorzugt 5000 bis 15 000 gemäß DE-A-3 231 399 mitverwendet werden. Die Polymerisate bzw. Copolymerisate weisen bei 100°C im allgemeinen eine Viskosität von 1 bis 1000 Pa.s auf. Vorzugsweise handelt es sich bei den Polymerisaten bzw. Copolymerisaten um solche aus 50 bis 100 Gew.-Teilen mindestens eines $C_1$-$C_{18}$-Alkylesters, vorzugsweise $C_1$-$C_{10}$-Alkylesters der Acryl- oder Methacrylsäure und 0 bis 50 Gew.- Teilen an anderen gegenüber Isocyanatgruppen inerten, olefinisch ungesättigten Monomeren.

Grundsätzlich ist es auch möglich, ganz oder teilweise Acrylester- bzw. Methacrylester-freie Polymerisate wie beispielsweise den oben gemachten Ausführungen entsprechende Polystyrole oder Styrolcopolymere einzusetzen.

Als weitere oberflächenverbessernde Zusätze dienen ferner Zinksalze einer Monocarbonsäure mit 10 bis 35 Kohlenstoffatomen. Bei den Carbonsäuren handelt es sich vorzugsweise um gegebenenfalls olefinisch ungesättigte aliphatische oder cycloaliphatische Carbonsäuren wie z. B. Dodecancarbonsäure, Stearinsäure, Ölsäure, Linolsäure, Linolensäure, Tallölsäure, Arachidonsäure, Myristinsäure, Dimerfettsäure, Palmitinsäure, Margarinsäure, Arachinsäure, Cerotinsäure, Melissinsäure, Erucasäure, Abietinsäure oder Naphthensäuren.

Bei der erfindungsgemäßen Verwendung der erfindungsgemäßen Gemische zur Herstellung von Polyurethankunststoffen werden die Gemische als alleinige oder anteilige NCO-reaktive Komponente mit Polyisocyanaten zur Reaktion gebracht.

Als Polyisocyanate können die zur Herstellung von Polyurethanen bekannten Polyisocyanate eingesetzt werden, z. B. aliphatische, cycloaliphatische, araliphatische, aromatische und heterocyclische Polyisocyanate, vorzugsweise Diisocyanate, wie sie z. B. von W. Siefken in Justus Liebigs Annalen der Chemie, 562, Seiten 75 - 136 beschrieben werden, z. B. Hexan-1,6-diisocyanat, 1-Isocyanato-3,3,5-trimethyl-5-isocyanatomethylcyclohexan, Dicyclohexylmethan-2,4'- und/oder 4,4'-Diisocyanat, 1,3- und/oder 1,4-Cyclohexandiisocyanat, gegebenenfalls in beliebigen Gemischen aller möglichen Stereoisomeren.

Besonders geeignet sind die aromatischen Polyisocyanate, wie Toluylen-2,4- und/oder -2,6-diisocyanat (TDI), Diphenylmethan-4,4'-und/oder -2,4'- und/oder -2,2'-diisocyanat (MDI) sowie die technischen Polyphenylpolymethylenpolyisocyanate, wie sie durch Anilin-Formaldehyd-Kondensation und anschließende Phosgenierung erhalten und beispielsweise in den GB-PS-874 430 und 848 671 beschrieben werden (Mehrkernpolyisocyanate enthaltendes MDI). Die durch Abwandlung von TDI und MDI erhaltenen modifizierten Polyisocyanate, z. B. mittels Polyolen durch Urethangruppen modifizierte, Carbodiimidgruppen-modifizierte, Isocyanuratgruppen-modifizierte, biuretisierte, allophanatisierte oder Uretdiongruppenhaltige Polyisocyanate sind Beispiele für abgewandelte technische Isocyanate.

Die Polyisocyanate können auch in Form von NCO-Prepolymeren aus den Ausgangspolyisocyanaten und z. B. höhermolekularen Polyolen eingesetzt werden.

Soweit Hilfs- und Zusatzstoffe im erfindungsgemäßen Gemisch noch nicht oder in nicht ausreichender Menge und Zusammensetzung enthalten sind, können diese auch zusätzlich in getrennter Dosierung oder in Vermischung mit einer der Reaktionskomponenten wie (zusätzlichen) höhermolekularen Polyhydroxylverbindungen, Polyisocyanaten oder NCO-Prepolymeren verwendet werden.

Die Verarbeitung der erfindungsgemäßen Gemische zusammen mit den anderen Reaktanden der Polyurethanbildung kann nach allen an sich bekannten Verfahren und Prozessen erfolgen, z. B. in mehrstufigen Verfahren (NCO-Prepolymerbildung mit anschließender Umsetzung) oder einstufigen (one-shot-)Prozessen. Die Verarbeitung erfolgt überwiegend mittels entsprechender Dosier-/Misch-/ und/oder Austrags-Geräte bzw. in Formen, wie diese in der Polyurethanverfahrenstechnik üblich sind (vgl. z. B. Ullmanns Enzyklopädie der Technischen Chemie, Verlag Chemie Weinheim, 4. Auflage, Band 19, Stichwort "Polyurethane", Seite 314 bis 336 und im Kunststoff-Handbuch, Band 7, "Polyurethane", Hanser-Verlag, 2. Auflage, 1983; insbesondere in den Kapiteln 4 (Verfahrenstechnik der PU-Herstellung - Seite 121 bis 169);

Kapitel 5 (PUR-Weichschaumstoffe - Seite 170 bis 245);

Kapitel 6 (PUR-Hartschaumstoffe - Seite 246 bis 332) und
Kapitel 7 (PUR-Integralschaumstoffe - Seite 333 bis 390).

Die erfindungsgemäßen Gemische können zur Herstellung von PU-Elastomeren in nicht-zelliger Form oder auch in zelliger Form, vorzugsweise in Rohdichten zwischen 300 bis 1200 kg/m$^3$, als thermoplastische PU-Elastomere oder Gießelastomere oder zur Herstellung von Schaumstoffen in weichelastischer, semiflexibler oder harter Form, z. B. von Blockschaumstoffen, Formschaumstoffen eines breiten Dichtebereichs, z. B. von 20 bis 400 kg/m$^3$, und - je nach Verwendungszweck - mit geschlossenen und/oder offenen Zellen verwendet werden.

In den nachfolgenden Beispielen beziehen sich alle Prozentangaben auf Gewichtsprozente und alle Angaben in Teilen auf Gewichtsteile.

**Versuchsteil**

**Beispiel 1** (Vergleichsbeispiel)

Versetzt man einen trifunktionellen Polyether, wie er durch Addition von zuerst 78 % Propylenoxid und dann 22 % Ethylenoxid an Trimethylolpropan zustande kommt (OH-Zahl 27), mit Ethylenglykol in einem Gewichtsverhältnis von 15 Tln Ethylenglykol auf 100 Tle des Polyethers, so erhält man eine trübe Mischung, die sich nach einigen Tagen in die Phasen zu trennen beginnt.

**Beispiel 2**

In Beispiel 2 wird das Verhalten von Mischungen aus dem Polyether aus Beispiel 1 und Ethylenglykol-Lösungen (4,86 % Lösung von KCl in Ethylenglykol) vorgestellt (vgl. Tabelle 1).

Tabelle 1

| Beispiel-Nr. | Polyether-Menge | Ethylenglykol/KCl-Mischung (4,86 %-ig) | Ethylenglykol | % KCl (bez. auf PE/EG-Gemische | Phasen |
|---|---|---|---|---|---|
| 2.1 | 100 Tle | - (Vergleich) | 5 Tle | - | 1 |
| 2.2 | 100 Tle | 15 Tle | - | 0,44 | 1 |
| 2.3 | 100 " | 20 " | - | 0,81 | 1 |
| 2.4 | 100 " | 30 " | - | 1,12 | 1 |
| 2.5 | 100 " | 50 " | - | 1,62 | 1 |
| 2.6 | 100 " | 100 " | - | 2,34 | 1 |
| 2.7 | 100 " | 100 " | 100 " | 1,56 | 1 |

Bei den Versuchen 2.4 - 2.6 trat bei der Vermischung starke Viskositätserhöhung auf.
PE = Polyether
EG = Ethylenglykol

**Beispiel 3**

3.1. Man vermischt 95 Teile des Polyethers aus Beispiel 1 mit 23,5 Teilen Ethylenglykol. Das Gemisch ist trübe und separiert in wenigen Tagen in 2 Phasen (Polyol 3.1.) (Vergleich).

3.2 Man vermischt 95 Teile des Polyethers aus Beispiel 1 mit 23,5 Teilen einer 1,1 gew.-%-igen Lösung von KCl in Ethylenglykol. Die resultierende Lösung ist klar und über Monate hinweg einphasig stabil. Es ist gleichfalls keine KCl-Auskristallisation zu beobachten (Polyol 3.2.).

**Beispiel 4**

In diesem Beispiel werden die mechanischen Werte von mit homogenen Polyol/Vernetzer-Gemischen hergestellten Polyurethanen mit jenen von Polyurethanen aus inhomogenen (zweiphasigen) Polyol/Vernetzer-Gemischen vergleichen. Es zeigt sich, daß das gute Werteniveau durch den Zusatz des Lösungsvermittlers nicht beeinträchtigt wird.

**Rezeptur** (Gewichtsteile):

| A | B | |
|---|---|---|
| 95 | 95 | Polyol aus Beispiel 1 |
| - | 23,5 | Ethylenglykol |
| 23,5 | - | 2 %-ige Ethylenglykol/KCl-Lösung |
| 15 | 15 | Dichlormethan |
| 0,15 | 0,15 | Dimethylzinndilaurat |
| 0,1 | 0,1 | Diazatricyclooctan |

Jeweils 235 Tle dieser Polyolkomponente werden mit 267 Tln eines Polyisocyanats verschäumt, das einen NCO-Wert von 24,5 % aufweist und durch Umsetzung eines Gemisches aus a) 90 Tln 4,4'-Diphenylmethandiisocyanat, das 5 - 10 % 2,4'-Isomeres enthält, und b) 10 Tln oligomeren Polyphenylpolymethylenpolyisocyanaten mit Dipropylenglykol entsteht.

Die Verschäumung erfolgt so, daß die Komponenten mit Hilfe eines handelsüblichen, mit einem zwangsgesteuerten Mischkopf ausgerüsteten Kolbendosiergeräts (mit einem Stößelgereinigten Drosselschiebermischkopf MQ ausgerüstetes Kolbendosiergerät (Rimdomat®) der Firma Hennecke, St. Augustin) bei 25°C innig vermischt und das Reaktionsgemisch in eine auf 60°C erwärmte Stahlform der Innenmaße 20 x 20 x 1 cm, deren Innenwände mit einem handelsüblichen Formtrennmittel auf Wachsbasis (Lösung von "Phönixwachs" in Dichlormethan der Firma Acmos) besprüht worden sind, eingetragen werden. Nach 2 Minuten wird entformt. Die mechanischen Daten der resultierenden Formkörper sind in der nachstehenden Tabelle zusammengefaßt.

| Tabelle | 4 A | 4 B |
|---|---|---|
| Raumgewicht (kg/m$^3$) (DIN 53 420) | 1050 | 1043 |
| Shore D-Härte (DIN 53 505) | 65 | 67 |
| Biege-E-Modul (MPa) (ASTM-D 790) | 528 | 608 |
| Zugfestigkeit (MPa) (DIN 53 504) | 27 | 29 |
| Weiterreißfestigkeit (kN/m) (DIN 53 515) | 85 | 87 |
| Bruchdehnung (%) (DIN 53 504) | 200 | 200 |
| sag-Wert [120°C, 30 min] | 7,5 | 9 |
| HDT-Wert (nach ISO R 75, B-Test) | 75 | 73 |

**Beispiel 5**

In diesem Beispiel werden andere Polyetherpolyole eingesetzt. Als Ethylenglykol/Kaliumchlorid-Lösung findet eine 5 %-ige Lösung Verwendung (siehe Tabelle 2).

Tabelle 2

| | 100 Teile Polyol | EG/KCl-Mischung | EG | % KCl im Ges.-Gemisch | Phasen |
|---|---|---|---|---|---|
| 5.1 | Polyol A | 10-40 Tle | - | 0,45-0,36 | 1 |
| 5.2 | Polyol B | 10 " | - | 0,45 | 1 |
| 5.3 | Polyol C | 10 " | - | 0,45 | 1 |
| 5.4 | Polyol D | 10 " | - | 0,45 | 1 |
| 5.5 | Polyol E | 10 " | - | 0,45 | 1 |
| 5.6 | Polyol F | 10 " | - | 0,45 | 1 |
| 5.7 | Polyole A bis E | - | jeweils 10 Tle | - | jeweils 2 (Vergleichsversuche |

**Polyol A**

Trifunktionelles, auf Trimethylolpropan gestartetes Polyethertriol der OH-Zahl 28 aus 83 % Propylenoxid und 17 % Ethylenoxid (endständig).

**Polyol B**

Trifunktionelles, auf Trimethylolpropan gestartetes Polyethertriol der OH-Zahl 35 aus 86,5 % Propylenoxid und 13,5 % Ethylenoxid (endständig).

**Polyol C**

Difunktionelles, auf Propylenglykol gestartetes Polyetherdiol der OH-Zahl 28 aus 85 % Propylenoxid und 15 % Ethylenoxid (endständig).

**Polyol D**

Difunktionelles, auf Propylenglykol gestartetes Polyetherdiol der OH-Zahl 28 aus 80 % Propylenoxid und 20 % Ethylenoxid (endständig).

**Polyol E**

Difunktionelles, auf Propylenglykol gestartetes Polyetherdiol der OH-Zahl 56 aus 80 % Propylenoxid und 20 % Ethylenoxid (endständig).

**Beispiel 6**

In diesem Beispiel wird als zusätzliche Komponent (Komponente C) ein aromatisches Diamin (gemisch aus 65 Teilen 2,4- und 35 Teilen 2,6-Diamino-3,5-diethyl-toluol) mitverwendet (siehe Tabelle 3).

Tabelle 3

| Versuch | Polyol | EG/KCl 5 %-ig | EG-Menge | Diamin-Menge | % KCl | Phasen |
|---|---|---|---|---|---|---|
| 6.1 | Polyol A | 20 | - | 20 | 0,36 | 1 |
| 6.2 | Polyol A | 40 | - | 20 | 0,31 | 1 |
| 6.3 | Polyol A | ohne | 20-40 | 20 | ohne | 2 (Vergleich) |
| 6.4 | Polyol F | ohne | 20-30 | 20 | ohne | 2 (Vergleich) |
| 6.5 | Polyol F | 20 | - | 10 | 0,38 | 1 |
| 6.6 | Polyol F | 20 | - | 20 | 0,36 | 1 |
| 6.7 | Polyol F | 20 | - | 30 | 0,33 | 1 |
| 6.8 | Polyol F | 30 | - | 10 | 0,36 | 1 |
| 6.9 | Polyol F | 30 | - | 20 | 0,33 | 1 |
| 9.10 | Polyol F | 30 | - | 30 | 0,31 | 1 |
| 6.11 | Polyol F | 40 | - | 10 | 0,33 | 1, hochviskos |
| 6.12 | Polyol F | 50 | - | 10 | 0,31 | 1, hochviskos |
| 6.13 | Polyol F | 30 | - | 5 | 0,37 | 1, hochviskos |

**Polyol F** (wie in Beispielen 1 bis 3)

Trifunktionelles, auf Trimethylolpropan gestartetes Polyethertriol der OH-Zahl 27 aus 78 % Propylenoxid und 22 % Ethylenoxid (endständig).

**Beispiel 7**

In diesem Beispiel werden Mischungen aus Polyol F und Polyetherpolyolen bzw. Polyetherpolyaminen ohne Ethylenoxid-Einheiten mit EG/KCl-Lösungen vermischt (siehe Tabelle 4).

9

Tabelle 4

| Polyether F | Co-Polyether | EG/KCl-Lösung 5 %-ig | EG | % KCl | Phasen |
|---|---|---|---|---|---|
| 50 Teile | 50 Teile Polyether H | - | 20 | 0 | 2 (z.Vgl.) |
| 50 Teile | 50 Teile Polyether H | 10 | - | 0,83 | 1 |
| 50 Teile | 50 Teile Polyether H | 20 | - | 1,4 | 1 |
| 50 Teile | 50 Teile Polyether I | - | 20 | 0 | 2 (z.Vgl.) |
| 50 Teile | 50 Teile Polyether I | 20 | - | 1,4 | 1 |
| 70 Teile | 30 Teile Polyether K | - | 20 | 0 | 2 (z.Vgl. |
| 70 Teile | 30 Teile Polyether K | 20 | - | 1,4 | 1 |
| 70 Teile | 30 Teile Polyetherpolyamin L | - | 20 | 0 | 2 (z.Vgl.) |
| 70 Teile | 30 Teile Polyetherpolyamin L | 20 | - | 1,4 | 1 |

**Tabelle 4** (Fortsetzung)

Polyether H: Polypropylenglykol der OH-Zahl 56
Polyether I: Polypropylenglykol der OH-Zahl 42, in dem 48 % aller OH-Gruppen durch Ammoniak-Druckbehandlung in primäre Aminogruppen umgewandelt worden sind
Polyether K: wie Polyether I, jedoch mit einem Aminierungsgrad von 80 %
Polyetherpolyamin L: wie Polyether I, jedoch mit einem Aminierungsgrad von 100 %
z.Vgl.: zum Vergleich

**Beispiel 8**

Werden 150 Tle eines Polyethers der OH-Zahl 35, wie er durch Addition von 82,5 Gew.-% Propylenoxid und dann 17,5 Gew.-% Ethylenoxid an Trimethylolpropan zustande kommt, mit 60 Tln Ethylenglykol vermischt, erhält man eine zweiphasige Mischung, bei der Verwendung von 60 Tln einer 5 %-igen Lösung von KCl in EG jedoch eine optisch klare, einphasige stabile Lösung.

**Beispiel 9**

Werden 150 Tle eines Polyethers der OH-Zahl 28, wie er
a) durch Addition eines Gemisches von 70 Gew.-% Propylenoxid und 30 Gew.-% Ethylenglykol an Propylenglykol zustande kommt,
bzw. b) 150 Tle eines Polyethers der OH-Zahl 20,7, wie er durch Addition von 70 Gew.-% Propylenoxid und dann 30 Gew.-% Ethylenoxid an Propylenglykol zustande kommt,
bzw. c) 150 Tle eines Polyethers der OH-Zahl 29, wie er durch Addition von 50 Gew.-% Propylenoxid, dann 30 Gew.-% Ethylenoxid, dann 15 Gew.-% Propylenoxid und dann wieder 5 % Ethylenoxid an Trimethylolpropan zustande kommt, mit 60 Gew.-Tln Ethylenglykol vermischt, erhält man eine zweiphasige, trübe Mischung, ebenso, wenn anstelle von 60 Tln Ethylenglykol 60 Tle Glyzerin verwendet werden.
Werden jedoch zur Vermischung mit den Polyetherpolyolen 5 gew.-%-ige Lösungen von KCl in Ethylenglykol bzw. Glyzerin verwendet, so werden klare, stabile, einphasige Mischungen erhalten, wobei sich die den letztgenannten Polyether enthaltenden Mischungen durch eine besonders niedrige Viskosität auszeichnen.

**Beispiel 10**

Aus 2600 Tln eines Polyethers der OH-Zahl 29, wie er durch Addition von 50 Gew.-% Propylenoxid, dann 30 Gew.-% Ethylenoxid, dann 15 Gew.-% Propylenoxid und dann wieder 5 Gew.-% Ethylenoxid zustande kommt, und 234 g 2,4-Di-isocyanatotoluol wird durch 4-stündiges Rühren bei 30° C ein NCO-Prepolymer mit dem NCO-Gehalt von 2,1 Gew.-% hergestellt.
Aus diesem NCO-Prepolymer wurde wie folgt ein sog. Aminopolyether hergestellt:
Zu einer vorgelegten Mischung aus 40,4 g NaOH, 1,5 l Wasser und 0,5 g Mersolat® (Emulgator-Produkt der BAYER AG, D 5090 Leverkusen) wird bei einer Temperatur von 20° C, die durch Kühlung mit einem Eisbad aufrechterhalten wird, unter intensivem Rühren innerhalb 30 Min 1,415 kg des obigen Prepolymers zugegeben.

Nach Beendigung der Zugabe wird 15 Min bei Raumtemperatur und dann 1 Stunde bei 80°C gerührt. Das Wasser wird bei 100°C/15 Min abdestilliert, der verbliebene zäh-flüssige Rückstand abgesaugt.

Das resultierende Produkt hat eine NH-Zahl von 30 mg KOH/g (Acetanhydrid-Methode), einen TDA-Gehalt von 0,548 Gew.-% und eine Viskosität von 1600 mPa.s 150 g dieses Aminopolyethers ergeben
a) mit 60 g Ethylenglykol ein zweiphasiges
b) mit 60 g 5 % Ethylenglykol/KCl-Lösung dagegen ein einphasiges, optisch-klares stabiles Gemisch. (a = Vergleichsversuch; b) erfindungsgemäß)

## Beispiel 11

Es wird ein Polyether der OH-Zahl 29 eingesetzt, wie er durch Addition von 50 Gew.-% Propylenoxid, dann 30 Gew.-% Ethylenoxid, dann 15 Gew.-% Propylenoxid und dann 5 Gew.-% Ethylenoxid an Trimethylolpropan zustande kommt.

| Polyether | Ethylenglykol | Ethylenglykol + 5 % KCl | Phasen | Viskosität |
|---|---|---|---|---|
| 80 Tle | - | 20 | 1 | 1200 mPa.s/25°C |
| 80 Tle | 5 | 15 | 1 | 1200 mPa.s/25°C |
| 80 Tle | 10 | 10 | 1 | 1100 mPa.s/25°C |

## Beispiel 12

Aus einem Polyether der OH-Zahl 29, hergestellt durch nacheinander erfolgende Addition von 50 Gew.-% Propylenoxid, 30 Gew.-% Ethylenoxid, 15 Gew.-% Propylenoxid und 5 Gew.-% Ethylenoxid an Trimethylolpropan, werden durch Umsetzung unter Druck mit Ammoniak zwei Aminopolyether mit aliphatischen, im wesentlichen primären Aminogruppen hergestellt, wobei einmal der Grad der Umwandlung von OH- in $NH_2$-Gruppen 73 %, zum anderen Mal 83 % beträgt.

Beide Aminopolyether (mit restlichen Anteilen an Hydroxygruppen von 27 % bzw. 17 %) ergeben mit Ethylenglykol (80 Tle Aminopolyether auf 20 Tle Ethylenglykol) zweiphasig trübe Gemische, mit 2 % KCl enthaltendem Ethylenglykol jedoch optisch klare, relativ niederviskose, einphasigstabile Lösungen.

## Beispiel 13

Ein Gemisch aus 95 Tln eines Polyethers der OH-Zahl 27 (hergestellt durch Addition von 78 % Propylenoxid und dann 22 % Ethylenoxid an Trimethylolpropan) und 23,5 Tln Ethylenglykol ist zweiphasig trübe.

Werden 0,7 g Dimethylolpropionsäure-kaliumsalz und 3 g eines propoxylierten Adduktes von 2-Butendiol-1,4 an $KHSO_3$ (MG 304) mitverwendet (als Lösung im Ethylenglykol) so werden einphasig klare Lösungen mit sehr niederer Viskosität erhalten. Wird dagegen durch Zusatz von KCl (anstelle der einbaufähigen K-Salze) homogenisiert, liegen die Viskositäten der Mischungen höher.

## Patentansprüche

1. Einphasig lagerstabile, organische Polyhydroxylverbindungen und Salze enthaltende emulgatorfreie Gemische aus

A) Polyoxyalkylenpolyolen des Molekulargewichtsbereichs 400-12000, die mindestens 5 Gew.-% und weniger als 80 Gew.-% an Oxyethyleneinheiten enthalten, und in denen 0 - 100 % der Hydroxylgruppen durch primäre oder sekundäre Aminogruppen oder durch die -O-$(CH_2)_3$-$NH_2$-Gruppe ersetzt sind,

B) mindestens zwei Hydroxylgruppen aufweisenden Polyolen des Molekulargewichts 62 bis 399, die mit A) ohne Zusatz von D) nicht lagerstabil homogen mischbar sind,

C) gegebenenfalls aromatischen Diaminen, in einer Menge bis zu 40 Gewichtsteilen, bezogen auf 100 Gewichtsteile der Komponente A),

D) 0,01-10 Gewichtsteilen, bezogen auf 100 Gewichtsteile der Komponente A), an Kalium-Salzen, deren Anionen Reste darstellen, wie sie durch Entfernung von mindestens einem Proton aus einer Säure mit einem $K_S$-Wert von mindestens $10^{-7}$ entstehen, und gegebenenfalls

E) weiteren Hilfs- und Zusatzstoffen der Polyurethanherstellung,

dadurch gekennzeichnet, daß die Komponente B) aus Ethergruppen-freien Alkanpolyolen besteht und in einer Menge von 5 - 50 Gewichtsteilen pro 100 Gewichtsteilen der Komponente A) vorliegt.

2. Gemische nach Anspruch 1, dadurch gekennzeichnet, daß die Komponente B) aus Ethylenglykol und/oder Butandiol-1,4 besteht.

3. Gemische nach Anspruch 1 und 2, dadurch gekennzeichnet, daß die Komponente D) aus Kaliumchlorid besteht.

4. Verwendung der Gemische gemäß Anspruch 1 bis 3 zur Herstellung von Polyurethankunststoffen.

## Claims

1. Homogeneously storable, emulsifier-free mixtures - containing organic polyhydroxyl compounds and salts - of

A) polyoxyalkylene polyols having a molecular weight in the range from 400 to 12,000 which contain at least 5 % by weight and less than 80 % by weight oxyethylene units and in which 0 to 100 % of the hydroxyl groups are replaced by primary or secondary amino groups or by the $-O-(CH_2)_3-NH_2-$ group,

B) polyols containing at least two hydroxyl groups and having a molecular weight in the range from 62 to 399, which do not form homogeneously storable mixtures with A) without the addition of D),

C) optionally aromatic diamines in a quantity of up to 40 parts by weight to 100 parts by weight of component A),

D) 0.01 to 10 parts by weight, based on 100 parts by weight of component A) of potassium salts, of which the anions represent residues of the type formed by the removal of at least one proton from an acid having a $K_S$ value of at least $10^{-7}$, and optionally

E) other auxiliaries and additives typically used in polyurethane production,

characterized in that component B) consists of alkane polyols free from ether groups and is present in a quantity of 5 to 50 parts by weight to 100 parts by weight of component A).

2. Mixtures as claimed in claim 1, characterized in that component B) consists of ethylene glycol and/or butane-1,4-diol.

3. Mixtures as claimed in claims 1 and 2, characterized in that component D) consists of potassium chloride.

4. The use of the mixtures claimed in claims 1 to 3 for the production of polyurethane plastics.

## Revendications

1. Mélanges sans émulsifiant, stables au magasinage, en une seule phase, contenant des composés organiques polyhydroxylés et des sels, mélange constitué par

A) des polyoxyalkylènepolyols dont le poids moléculaire se situe entre 400 et 12 000, qui contiennent au moins 5 % en poids et moins de 80 % en poids de motifs oxyéthylènes et dans lesquels 0 à 100 % des groupes hydroxyles ont été remplacés par des groupes amino primaires ou secondaires ou par le groupe $-O-(CH_2)_3-NH_2$,

B) des polyols, présentant au moins deux groupes hydroxyles et dont le poids moléculaire se situe entre 62 et 399 et qui ne sont pas miscibles de façon homogène et stable au magasinage avec A) si l'on n'ajoute pas D),

C) éventuellement des diamines aromatiques, présentes en une quantité allant jusqu'à 40 parties en poids, pour 100 parties en poids du composant A),

D) 0,01 à 10 parties en poids, sur la base de 100 parties en poids du composant A), de sels de potassium dont les anions représentent des restes tels qu'ils résultent de l'enlèvement d'au moins un proton d'un acide ayant une valeur de l'indice $K_S$ au moins égale à $10^{-7}$, et éventuellement

E) d'autres adjuvants et additifs de la préparation des polyuréthannes,

mélanges caractérisés en ce que le composant B) consiste en des alcanepolyols dépourvus de groupes éthers et présents en une quantité de 5 à 50 parties en poids pour 100 parties en poids du composant A).

2. Mélanges selon la revendication 1, caractérisés en ce que le composant B) consiste en l'éthylèneglycol et/ou du butane-diol-1,4.

3. Mélanges selon les revendications 1 et 2, caractérisés en ce que le composant D) consiste en du chlorure de potassium.

4. Utilisation des mélanges selon les revendications 1 à 3, pour la préparation de matières plastiques de type polyuréthanne.